(19) Europäisches Patentamt
European Patent Office
Office européen des brevets

(11) Numéro de publication: **0 518 980 B1**

(12) # FASCICULE DE BREVET EUROPEEN

(45) Date de publication de fascicule du brevet: **14.12.94**

(51) Int. Cl.⁵: **C01B 33/26**, C01B 33/32

(21) Numéro de dépôt: **91906088.9**

(22) Date de dépôt: **05.03.91**

(86) Numéro de dépôt internationale :
**PCT/FR91/00177**

(87) Numéro de publication internationale :
**WO 91/13830 (19.09.91 91/22)**

(54) **PROCEDE D'OBTENTION D'UN GEOPOLYMERE ALUMINO-SILICATE ET PRODUITS REALISES PAR CE PROCEDE.**

(30) Priorité: **07.03.90 FR 9002853**
**03.01.91 FR 9100027**

(43) Date de publication de la demande:
**23.12.92 Bulletin 92/52**

(45) Mention de la délivrance du brevet:
**14.12.94 Bulletin 94/50**

(84) Etats contractants désignés:
**BE CH DE GB IT LI**

(56) Documents cités:
**EP-A- 0 026 687**
**EP-A- 0 059 088**
**WO-A-82/00816**
**WO-A-88/02741**
**WO-A-89/02766**
**DE-A- 3 246 602**
**FR-A- 2 512 805**

(73) Titulaire: **Davidovits, Joseph**
**16, rue Galilée**
**F-02100 Saint-Ouentin (FR)**

Titulaire: **DAVIDOVITS, Nicolas**
**6, rue Brison**
**F-42300 Roanne (FR)**

Titulaire: **DAVIDOVICS, Michel**
**5, route de Villers**
**F-60700 Pont-Ste-Maxence (FR)**

(72) Inventeur: **Davidovits, Joseph**
**16, rue Galilée**
**F-02100 Saint-Ouentin (FR)**
Inventeur: **DAVIDOVITS, Nicolas**
**6, rue Brison**
**F-42300 Roanne (FR)**
Inventeur: **DAVIDOVICS, Michel**
**5, route de Villers**
**F-60700 Pont-Ste-Maxence (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

EP 0 518 980 B1

Rank Xerox (UK) Business Services
(3.10/3.09/3.3.3)

## Description

L'invention a pour objet la description d'un procédé d'obtention d'un géopolymère de la famille du Poly(sialate-disiloxo) alcalin (M)-PSDS de formule

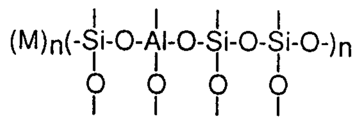

M représentant au moins un cation alcalin et n le degré de polymérisation.

Les géopolymères alumino-silicates ont été groupés en trois familles, en fonction du rapport atomique Si/Al lequel peut être égal à 1, 2 ou 3. Si l'on adopte l'écriture simplifiée telle qu'elle est utilisée le plus couramment, on distingue:

| | | |
|---|---|---|
| le poly(sialate) | Mn(-Si-O-Al-O-)n | ou (M)-PS, |
| le poly(sialate-siloxo) | Mn(-Si-O-Al-O-Si-O-)n | ou (M)-PSS, |
| le poly(sialate-disiloxo) | Mn(-Si-O-Al-O-Si-O-Si-O-)n | ou (M)-PSDS. |

Comme on petit le lire dans plusieurs articles scientifiques tel par exemple "Geopolymer: room temperature ceramic matrix composites" publié dans *Ceram. Eng. Sci. Proc*, 1988, Vol.9 (7-8), pp.835-41, cf. *Chemical Abstracts* 110-080924, ou encore "Geopolymer Chemistry and Properties" publié dans *Geopolymer '88*, Vol. 1, pp. 19-23, Université de Technologie de Compiègne, ou encore dans la publication internationale WO 88/02741 de la demande de brevet PCT/FR 87/00396 (équivalent de EP 0.288.502 et de US 4.888.311), l'art antérieur décrit la fabrication

des poly(sialates) Mn(-Si-O-Al-O-)n (Na)-PS/(K)-PS

et

des poly(sialate-siloxo) Mn(-Si-O-Al-O-Si-O-)n (Na)-PSS/(K)-PSS.

Il n'existe pas, dans l'art antérieur, de procédé permettant de fabriquer le

poly(sialate-disiloxo) Mn(-Si-O-Al-O-Si-O-Si-O-)n (M)-PSDS.

C'est ce que permet le procédé selon la présente invention.

Les géopolymères alumino-silicates s'apparentent de part leur constitution et leur structure tridimensionnelle à la catégorie des zéolites et feldspathoïdes. Or, on sait que pour ces matériaux, la stabilité thermique est fonction du rapport Si/Al. Plus le rapport est élevé et plus la stabilité est grande. L'homme de métier petit donc très facilement comprendre l'intérêt présenté par l'emploi de géopolymères de type

(M)-PSDS, Mn(-Si-O-Al-O-Si-O-Si-O-)n de rapport Si/Al = 3,

par rapport au

(M)-PSS, Mn(-Si-O-Al-O-Si-O-)n de rapport Si/Al =2

et au

(M)-PS, Mn(-Si-O-Al-O-)n de rapport Si/Al = 1.

On sait que les zéolites riches en silicium sont fabriquées, comme toutes les autres zéolites, dans des conditions hydrothermales et dans un milieu réactionnel fortement dilué. Le rapport molaire $M_2O:H_2O$ est de l'ordre de 1:50 à 1:100 et les produits zéolites obtenus sont des poudres extrêmement poreuses.

Au contraire, les géopolymères sont des liants permettant la fabrication d'objets à caractère céramique, soit par agglomération de charges, soit par imprégnation de fibres ou tissus; l'expérience accumulée dans la fabrication des géopolymères, comme décrite dans les brevets

EP 026.687, EP 066.571, EP 288.502 (WO 88/02741) déposés par la demanderesse, implique une forte concentration du milieu réactionnel avec un rapport molaire $M_2O:H_2O$ supérieur a 1:17,5 dans le cas de $Na_2O$, ou de l'ordre de 1:12,0 dans le cas de $K_2O$.

Dans tout ce qui suit, le terme liant géopolymère, ou durcissement d'une résine géopolymèrique, indique que le durcissement s'effectue par réaction interne du type polycondensation ou du type hydrothermal et qu'il n'est pas le résultat d'un simple séchage, comme c'est généralement le cas pour des liants à base de silicates alcalins.

Il n'existait pas, jusqu'à maintenant, de moyen permettant d'obtenir un mélange réactionnel ayant un rapport Si/Al =3, et un rapport molaire $M_2O:H_2O$ supérieur à 1:17,5. Dans le cadre de l'invention, le silicium participe à la réaction chimique sous la forme dissoute de silicate alcalin possédant un rapport

molaire $SiO_2:M_2O$ supérieur a' 4,0:1,0 et dont la concentration en matière solide doit être supérieure à 60% en poids. Au contraire, les silicates alcalins industriels de ce type sont généralement extrêmement dilués, la concentration en matière solide étant inférieure à 25% en poids et ne permettent pas d'obtenir le mélange réactionnel préconisé par la présente invention.

L'objet secondaire de la présente invention est l'obtention d'une solution de silicate alcalin ayant un rapport molaire $SiO_2:M_2O$ supérieur à 4,0:1,0 et dont la concentration en matière solide est supérieure à 60% en poids.

Le procédé selon l'invention permet l'obtention d'un géopolymère alumino-silicate, dont la composition, à l'état hydraté, exprimée en terme d'oxyde est:

$yM_2O:Al_2O_3:xSiO_2:wH_2O$

dans laquelle $M_2O$ est $K_2O$ et/ou $Na_2O$, "w" est une valeur au plus égale à 3, "x" est une valeur comprise entre 5,5 et 6,5 environ, "y" est une valeur comprise entre 1,0 et 1,6 environ, le dit géopolymère étant de la famille du Poly(sialate-disiloxo) alcalin (M)-PSDS de formule

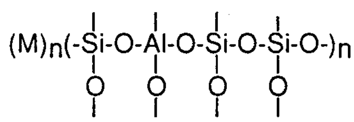

de structure tridimensionnelle contenant également des éléments de structure bidimensionnelle, M représentant au moins un cation alcalin et n le degré de polymérisation. Il consiste à faire réagir une résine géopolymérique obtenue à partir d'un mélange réactionnel contenant:

a) une solution aqueuse de silicate alcalin de rapport molaire $SiO_2:M_2O$ compris entre ou égal à:

| | |
|---|---|
| $SiO_2:M_2O$ | 4,0:1 et 6,5:1 |

dont la concentration est supérieure à 60% en poids et dont la viscosité initiale à 20°C est de 0.2 Pa.s, puis augmente pour ne pas dépasser 0.5 Pa.s avant 5 heures à 20°C;

b) un oxyde alumino-silicate ($Si_2O_5,Al_2O_2$) dans lequel le cation Al est en coordination (IV-V) comme déterminé par le spectre MAS-NMR pour $^{27}Al$, le dit oxyde étant en quantité telle que le rapport molaire $Al_2O_3:SiO_2$ est compris entre ou égal à:

| | |
|---|---|
| $Al_2O_3:SiO_2$ | 1:5,5 et 1:6,5 |

puis à laisser durcir la dite résine géopolymèrique.

La demanderesse a eu la surprise de découvrir qu'il était en effet possible de fabriquer une solution concentrée de silicate alcalin très riche en $SiO_2$, à condition d'employer comme matière de départ, de la fumée de silice, dite silice thermique, par opposition aux silices amorphes fabriquées par condensation des vapeurs de silanes ou par précipitation de solution de silice.

Dans le cadre de l'invention, le terme fumée de silice thermique désigne exclusivement la silice amorphe obtenue à partir de la condensation des vapeurs de SiO résultant de l'électro-fusion, à très haute température, généralement de l'ordre de 2000°C, de composés siliceux; le dit silicate alcalin est essentiellement obtenu par dissolution de cette silice thermique dans une solution concentrée de NaOH et/ou KOH.

Dans un exemple préféré de l'invention, la fumée de silice thermique est spécialement préparée par électro-fusion de sable de zircon. Cette fumée de silice thermique employée contient au plus 10% en poids de $Al_2O_3$ et au moins 90% en poids de $SiO_2$. On peut lui attribuer une formule chimique brute comprise entre ($13SiO_2,AlO_2$) et ($16SiO_2,AlO_2$), c'est à dire celle d'un oxyde alumino-silicate dans lequel Al est en coordination (IV), auquel il convient d'ajouter de la silice amorphe $SiO_2$. Dans ce qui suit, nous emploierons la formule brute ($15SiO_2,AlO_2$) pour désigner l'oxyde alumino-silicate qui caractérise cette silice thermique, sans pour autant exclure les autres compositions de fumée de silice thermique contenant au plus 10% en poids de $Al_2O_3$ et au moins 90% en poids de $SiO_2$.

On pourra également employer des fumées de silice fabriquées par électro-fusion d'autres matériaux siliceux, en particulier on pourra utiliser les fumées de silice résultant de la production des alliages métalliques ferro-silicium. Dans ce dernier cas il sera parfois nécessaire de faire subir un traitement à ce sous-produit afin d'enlever soit le carbone, soit le silicium métal.

L'état antérieur de la technique pour ce qui concerne les propriétés des silicates alcalins est parfaitement connu. On trouvera par exemple dans la revue *Industrial and Engineering Chemistry*, Vol.61, N°4, Avril 1969, pp. 29-44, "Properties of Soluble Silicates" une étude exhaustive sur les propriétés physiques des solutions de silicate alcalin.

Le tableau suivant résume la différence essentielle entre les solutions de l'état antérieur et les silicates alcalins produits dans la présente invention.

| *Viscosité à 20°C et concentration de silicates alcalins solubles:* | | | | |
|---|---|---|---|---|
| | rapport molaire | | viscosité | concentration |
| *état antérieur* | $SiO_2:Na_2O$<br>$SiO_2:K_2O$ | 4,0:1<br>4,5:1 | 0.2 Pa.s<br>0.2 Pa.s | 25%<br>20% |
| *présente invention exemple 1)* | $SiO_2:K_2O$ | 5,6:1 | 0.2 Pa.s | 69% |

Les silicates solubles obtenus dans le cadre de l'invention ne sont pas stables dans le temps. Leur viscosité augmente et cette augmentation est fonction de la température. On considère qu'il existe 4 phases a), b), c) et d) mises en évidence par la viscosité.

Dans la phase a) les particules de silice thermique ($15SiO_2,AlO_2$) sont désagrégées pour se trouver sous forme d'un sol. La viscosité baisse pour atteindre un minimum d'environ 0.2 Pa.s, à 20°C.

La phase b) est celle de la digestion, ou dissolution. Elle est endothermique, et peut être accélérée par chauffage. A 20°C elle dure environ 4-5 heures et la viscosité augmente pour atteindre 0.5 Pa.s.

La phase c) marque le début de la géopolymèrisation. Elle dure environ 10 heures à 20°C. La viscosité augmente lentement jusque 2.5-3 Pa.s. Cette viscosité détermine la limite supérieure de la durée pendant laquelle la résine géopolymèrique est manipulable. On l'appelle durée de vie, ou "pot-life".

Ensuite la viscosité monte rapidement; c'est la phase d), celle du durcissement.

Le temps de durée de vie ou "pot-life" est très suffisant pour réaliser l'objet principal de l'invention, à savoir la géopolymèrisation du poly(sialate-disiloxo) (M)-PSDS, Mn(-Si-O-Al-O-Si-O-Si-O-)n. Elle implique la dissolution de la silice thermique ($15SiO_2,AlO_2$). Si, pour une raison quelconque, cette phase de dissolution est écourtée, alors le géopolymère obtenu ne sera pas le (M)-PSDS, mais simplement un type poly(sialate-siloxo) (M)-PSS contenant de la silice thermique ($15SiO_2,AlO_2$) non dissoute.

Le second réactif permettant la réalisation de l'objet principal de l'invention est l'oxyde alumino-silicate ($Si_2O_5,Al_2O_2$))) ayant le cation Al en coordination (IV-V) comme déterminé par le spectre d'analyse en Résonance Magnétique Nucléaire MAS-NMR pour $^{27}Al$; cet oxyde alumino-silicate ($Si_2O_5,Al_2O_2$) est obtenu par traitement thermique d'alumino-silicates hydratés naturels, dans lesquels le cation Al est en coordination (VI) comme déterminé par le spectre d'analyse en Résonance Magnétique Nucléaire MAS-NMR pour $^{27}Al$.

En effet le spectre MAS-NMR pour $^{27}Al$ présente deux pics, l'un autour de 50-65 ppm caractéristique de la coordination Al(IV) et l'autre autour de 25-35 ppm que certains auteurs scientifiques définissent comme indiquant la coordination Al(V).

Nous adopterons, dans ce qui suit, la notion de coordination mixte Al(IV-V) pour cet oxyde ($Si_2O_5,Al_2O_2$)).

L'emploi de fumée de fumée de silice pour fabriquer des solutions de silicates alcalins est déjà connu dans l'art antérieur.

Cependant, dans l'art antérieur, l'objectif était de fabriquer des solutions stables pouvant être stockées et exploitées commercialement sous la forme de solution de silicate. Cela explique pourquoi les rapports molaires proposés par l'art antérieur $SiO_2:M_2O$ sont inférieurs à 3,5:1 au lieu d'être compris entre 4,0:1 et 6,5:1 comme nécessité dans la présente invention.

On connait par exemple les différents procédés permettant de fabriquer, à partir des fumées de silice sous-produits des alliages ferro-siliciums, des solutions de silicate de sodium destinées à la fabrication de liants pour fonderie comme dans le brevet EP 059.088, ou les demandes de brevet japonais JP 74134599 (Chemical Abstracts 082:142233, 1975), JP 75140699 (Chemical Abstracts 084-137974, 1976).

Les fumées de silice ont été employées en tant que charges ultra-fines dans les géopolymères de type (M)-PSS, Mn(-Si-O-Al-O-Si-O-)n.

Ainsi dans la demande de brevet PCT/FR 87/00396-WO 88/02741 déposée par la demanderesse, on recommande l'addition d'éléments ultra-fins siliceux et/ou alumineux et/ou silico-alumineux, de dimension inférieure à 5 microns, de préférence inférieure à 2 microns. On précise bien qu'il s'agit de charges, et que celles-ci ne sont pas dissoutes dans la résine géopolymèrique, mais réagissent simplement en surface.

L'étude au microscope optique et le spectre MAS-NMR indique que dans ces matrices géopolymères de type (K)-PSS, la fumée de silice est tout d'abord insoluble puisque l'on voit dans le matériau solidifié les micro-sphères de dimensions inférieures à 0,5 microns. C'est ensuite seulement que la fumée de silice est digérée lentement, dans le matériau solide (cf. "Structural Characterization of Geopolymeric Materials with X-Ray Diffractometry and MAS-NMR Spectroscopy" Geopolymer '88, Vol. 2, pp. 149-166, et Abstracts Session B NR8, Geopolymer '88, Vol. 1, p. 6.).

Les fumées de silice, sous-produits des alliages ferro-silicium, améliorent sensiblement les propriétés des liants hydrauliques comme le ciment portland. Il était donc naturel que dans les ciments géopolymèriques associés au ciment portland, on inclut également dans les poudres, ce type de fumée de silice.

Ainsi, dans le brevet US 4.642. 137, certains exemples préconisent l'addition de fumée de silice. Cependant, là aussi, les conditions expérimentales font que cette fumée de silice n'est pas dissoute, et reste à l'état de charge. En effet le mélange en poudre est destiné à accélérer la prise du ciment portland. Or il est bien indiqué dans le texte de ce brevet Col. 3, ligne 48-68, qu'il faut avant toute chose éviter l'emploi des silicates solubles en combinaison avec le ciment portland. Divers sous-produits de l'électrofusion de minéraux siliceux, apparentés à la silice thermique, ont été ajoutés en tant que charge dans les résines géopolymèriques de type (M)-PSS, Mn(-Si-O-Al-O-Si-O-)n.

Ainsi les demandes de brevets allemands DE 3.246.602, 3.246.619, 3.246.621 et leurs équivalents européens et américains décrivent l'emploi de mélanges d'oxydes contenant $SiO_2$ et $Al_2O_3$ obtenus par condensation des fumées produites lors de l'électrofusion de corindon, des mullites ou des ferro-siliciums. Il est cependant bien précisé dans le texte que ce qui caractérise ces mélanges d'oxydes est leur insolubilité dans les solutions d'hydroxydes alcalins, voir par exemple DE 3.246.602, page 10, ligne 10, US 4.533.393, Col.4, ligne 59.

De plus, il est recommandé d'utiliser le liant, sans aucune maturation (DE 3.246.602, page 11, ligne 16; US 4.533.393, Col.5, ligne 36). D'après les analyses indiquées dans les exemples, les différentes fumées siliceuses contiennent de 7 à 75% en poids de $SiO_2$ et de 12 à 87% en poids de $Al_2O_3$. Il s'agit donc plutôt de fumées siliceuses riches en alumine, qui effectivement sont insolubles dans les solutions alcalines.

Au contraire, dans le cadre de la présente invention, les fumées de silice thermiques employées contiennent moins de 10% en poids de $Al_2O_3$, en général moins de 5% en poids, et plus de 90% en poids de $SiO_2$, en général plus de 94%. Elles sont solubles dans les solutions d'hydroxydes alcalins, et un temps de maturation est nécessaire pour assurer cette dissolution.

On a proposé de nombreux liants alumino-silicates essentiellement destinés à l'agglomération de sable pour fonderie. On peut citer par exemple le brevet US 4.432.798, qui décrit l'utilisation d'un hydrogel alumino-silicate dans lequel le rapport molaire $Al_2O_3$:$SiO_2$ est compris entre 0,07 et 4,20. Cependant les formulations correspondant au rapport molaire préconisé par la présente invention ne sont pas liquides, elles sont extrêmement visqueuses, sous forme de gel, et de plus durcissent instantanément; ainsi peut-on lire Col. 6, ligne 47, qu'un hydrogel dans lequel le rapport atomique Al:Si est 1:3 durcit au bout de 15-20 secondes à la température ambiante.

Au contraire, dans la présente invention, la viscosité est très faible, de l'ordre de 0.25-0.3 Pa.s, et la solution est utilisable pendant plusieurs heures. De plus, dans le brevet US 4.432.798, la concentration de l'hydrogel alumino-silicate est inférieure à 50%, en général 25%, alors que dans la présente invention la forte concentration supérieure à 60%, en général supérieure à 70% n'influe pas sur la faible viscosité de la résine géopolymèrique.

On connait également des procédés de fabrication de poly(alumino-silicate) dans lesquels le rapport Si:Al est supérieur à 2:1.

Ainsi le brevet US 4.213.950, équivalent du brevet européen EP 013.497, décrit l'obtention de poly-(alumino-silicate) de rapport atomique Si:Al = 3. Le procédé d'une part est destiné à fabriquer des poudres très poreuses pouvant servir de catalyseur, d'adsorbant, de détergent, donc similaires aux zéolites cristallines en poudre, les matières de départ étant de l'aluminate alcalin et de l'acide silicique.

Au contraire, dans le cadre de l'invention, l'objectif est de préparer une résine géopolymèrique ayant des propriétés liantes, permettant la réalisation, soit par agglomération de charges minérales et/ou organiques, soit par imprégnation de fibres et/ou de tissus, d'objet à caractère céramique stable jusque 1100 °C, possédant une matrice à base d'un géopolymère de la famille du Poly(sialate-disiloxo) alcalin (M)-PSDS de formule

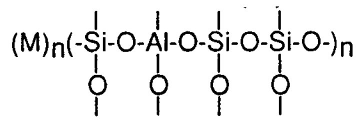

La résine géopolymèrique préparée selon le procédé de la présente invention possède également des propriétés filmogènes. On peut donc fabriquer des films et fils, selon les techniques connues, à base d'un géopolymère de la famille du Poly(sialate-disiloxo) alcalin (M)-PSDS

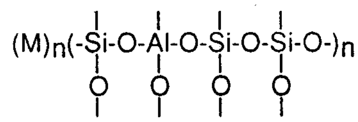

Dans le procédé selon la présente invention, la viscosité de la résine géopolymèrique augmente avec le temps. Elle ne peut donc pas être stockée. C'est la raison pour laquelle, le procédé préféré de l'invention consiste à dissoudre la fumée de silice thermique ($15SiO_2,AlO_2$), en au moins deux fois, ce qui permet le stockage des différents ingrédients.

Dans la méthode préférée d'obtention d'un géopolymère de la famille du Poly(sialate-disiloxo) de potassium (K)-PSDS de formule

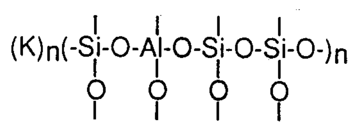

on fabrique la résine géopolymèrique en préparant séparément:

a) une solution aqueuse de silicate de potasse de rapport molaire

| | |
|---|---|
| $K_2O:SiO_2$ | 1:1 |

concentrée à 50%;

b) une poudre contenant l'oxyde alumino-silicate ($Si_2O5.Al_2O_2$) et la fumée de silice thermique ($15SiO_2,AlO_2$);

Dans le mélange des constituants a) et b), dont la teneur en eau est inférieure à 30% en poids, la viscosité initiale de la résine géopolymèrique est de 0.35-0.5 Pa.s, et le rapport molaire des oxydes compris entre ou égal à:

| | |
|---|---|
| $K_2O:SiO_2$ | 1:4,0 et 1:6,5 |
| $Al_2O_3:SiO_2$ | 1:5,5 et 1:6,5 |
| $K_2O:H_2O$ | 1:7,0 et 1:12,0 |

Puis on laisse maturer la dite résine géopolymèrique pour permettre la dissolution de la dite silice thermique ($15SiO_2,AlO_2$); la viscosité diminue d'abord jusqu'à un minimum de 0.25-0.3 Pa.s, puis elle augmente jusque 0.5 Pa.s pendant la phase de dissolution proprement dite, pour atteindre 2.5-3 Pa.s lorsque l'on se trouve dans la phase de géopolymérisation.

La vitesse de durcissement est essentiellement fonction de la température. Par rapport aux géopolymères de type poly(sialate-siloxo) K-PSS par exemple décrits dans les brevets

EP 026.687, EP 066.571, EP 288.502 (WO 88/02741)

la vitesse de durcissement des (M)-PSDS de la présente invention est fortement accélérée. Au lieu de 2-3 heures à 60 °C, le temps nécessaire est ici de l'ordre de seulement 30 minutes à 60 °C (voir Exemple 2). A 100 °C, la vitesse de durcissement n'est que de 15 minutes (voir Exemple 6), tout en ayant un "pot-life" de 12 heures à 20 °C.

Dans la résine géopolymèrique le rapport molaire $K_2O:Al_2O_3$ est en général compris entre ou égal à:

| | |
|---|---|
| $K_2O:Al_2O_3$ | 1:1 et 1,6:1. |

Un rapport molaire $K_2O:Al_2O_3$ = 1:1 caractérise un poly(sialate-disiloxo) (K)-PSDS Kn(-Si-O-Al-O-Si-O-Si-O-)n dans lequel tous les tétraèdres $SiO_4$ et $AlO_4$ sont de type Q4, comme déterminé par le spectre MAS-NMR. La structure du géopolymère est entièrement tridimensionnelle.

Lorsque le rapport molaire $K_2O:Al_2O_3$ est de l'ordre de 1,3:1 ou supérieur, il y a formation également de géopolymère moins réticulé contenant $SiO_4$ de type Q3. On pense que le caractère filmogène de la résine géopolymèrique est surtout dû à la présence de ce type de géopolymère.

Lorsque le rapport molaire $K_2O:Al_2O_3$ est trop élevé, cela peut engendrer la formation de géopolymère Kn(-Si-O-Al-O-Si-O-Si-O)n de structure linéaire contenant $SiO_4$ de type $Q_2$ qui, au cours du vieillissement et de l'utilisation des objets céramiques réalisés d l'aide de la résine géopolymèrique, peuvent se dépolymériser puis migrer dans la structure et éventuellement occasionner des défauts de surface.

Ce type de défaut peut-être éliminé en partie en ajoutant un stabilisant, ou tout autre agent durcisseur employé couramment dans les liants à base de silicate alcalin. Par exemple pour éviter la migration d'alumino-silicate linéaire soluble non stabilisé dans la matrice géopolymère, on ajoute au dit mélange réactionnel 2,5% à 3,5% en poids de ZnO.

L'hydroxyde alcalin peut être soit NaOH, soit KOH ou un mélange de NaOH+KOH, bien que la préférence soit d'utiliser l'hydroxyde KOH. Le géopolymère poly(sialate-siloxo) (M)-PSDS, Mn(-Si-O-Al-O-Si-O-Si-O-)n sera soit de type (Na)-PSDS lorsque le silicate alcalin sera du silicate de sodium, soit de type (K)PSDS avec un silicate de potassium, ou éventuellement de type (Na,K)-PSDS lorsque que les silicates de sodium et de potassium seront produits dans le même mélange réactionnel.

Les exemples suivants permettent d'illustrer la présente invention. Ils n'ont pas de caractère limitatif sur la portée globale de l'invention telle que présentée dans les revendications. Les rapports entre les oxydes sont des rapports molaires et les parties indiquées sont en poids.

La silice thermique ($15SiO_2,AlO_2$) employée dans les exemples a été produite par condensation et refroidissement des vapeurs de SiO et AlO générées par l'électrofusion de sable de zircon. La composition chimique de cette silice thermique est (parties en poids des principaux oxydes):

| | |
|---|---|
| $SiO_2$ | 94.24 |
| $Al_2O_3$ | 3.01 |
| CaO | 0.04 |
| Perte au Feu | 0.95 |

Exemple 1)

On prépare la solution de silicate de potasse contenant:

| | |
|---|---|
| silice thermique | 152g |
| KOH | 50g |
| eau | 82.4g |

Pour éviter tout échauffement, la solution contenant l'eau et KOH est mélangée en premier lieu puis laisser à refroidir au réfrigérateur jusque 5°C. On ajoute alors la silice thermique ($15SiO_2,AlO_2$). Après 90 minutes de dissolution à 5°C, le mélange est utilisé à la température ambiante; la viscosité de la solution est de 0.2 Pa.s. Elle s'épaissit très lentement pour atteindre 0.5Pa.s, au bout de 5 heures, lorsque la température du mélange est maintenue à 20°C. Cette solution a un rapport molaire

| | |
|---|---|
| $SiO_2:K_2O$ | = 5,6:1 |
| $K_2O:H_2O$ | = 1:11,2 |

La concentration en matière solide est de 69% en poids.

Exemple 2)

Dans la solution de l'exemple 1) on ajoute l'oxyde ($Si_2O5.Al_2O_2$) dans lequel le cation Al est en coordination (IV-V) comme déterminé par le spectre MAS-NMR pour $^{27}Al$, le dit oxyde étant en quantité telle que, dans le mélange réactionnel, le rapport molaire $Al_2O_3$:$SiO_2$ est

| | |
|---|---|
| $Al_2O_3$:$SiO_2$ | 1:6,10 |

La résine géopolymèrique ainsi obtenue a une viscosité de 0.45 Pa.s; elle est coulée dans un moule que l'on porte à l'étuve à 60°C. Le durcissement s'effectue en 30 minutes. On démoule et laisse sécher à 60°C. L'analyse chimique donne une formule brute:

$1{,}08K_2O:Al_2O_3:6{,}1SiO_2:3H_2O$

La structure du géopolymère, comme déteminée par le spectre MAS-NMR dans lequel tous les tétraèdres $SiO_4$ et $AlO_4$ sont de type $Q_4$, ainsi que le rapport molaire $K_2O$:$Al_2O_3$ = 1,08:1, caractérise un poly(siliate-disiloxo) (K)-PSDS

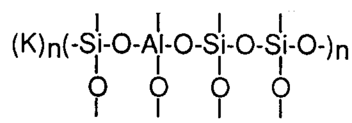

entièrement tridimensionnel.

Exemple 3)

Avec la silice thermique ($15SiO_2,AlO_2$), la potasse KOH, on réalise une solution de silicate de potasse de rapport molaire $K_2O:SiO_2 = 1$ et de concentration 50% de matières solides $SiO_2 + K_2O$. Cette solution est stable dans le temps et peut donc être conservée. Au lieu de silice thermique ($15SiO_2,AlO_2$) on peut également dissoudre de la silice amorphe $SiO_2$.

Exemple 4)

A la solution de l'exemple 3) on ajoute de la silice thermique ($15SiO_2,AlO_2$) et aussi de l'oxyde ($Si_2O5.Al_2O_2$) dans lequel le cation Al est en coordination (IV-V) comme déterminé par le spectre MAS-NMR pour $^{27}Al$, de telle sorte que, dans le mélange réactionnel, le rapport molaire $Al_2O_3$:$SiO_2$ soit

| | |
|---|---|
| $Al_2O_3$:$SiO_2$ | 1:6,28 |

Les autres rapports molaires sont:

| | |
|---|---|
| $K_2O$:$SiO_2$ | 1:4,04 |
| $K_2O$:$H_2O$ | 1:8,4 |
| $K_2O$:$Al_2O_3$ | 1:1,5 |

Pour 100 parties en poids de ce mélange réactionnel on ajoute également 3,2 parties en poids de ZnO.

La résine géopolymèrique ainsi obtenue a une teneur en eau de 26%; lorsque la viscosité atteind 1.5 Pa.s, elle est coulée dans un moule que l'on porte à l'étuve à 60°C. Le durcissement s'effectue en 30 minutes. On démoule et laisse sécher à 60°C. L'analyse chimique donne une formule brute:

$1{,}5K_2O:Al_2O_3:6{,}28SiO_2:2{,}8H_2O$

Le spectre MAS-NMR montre que les tétraèdres $SiO_4$ et $AlO_4$ sont de type $Q_4$ avec aussi des tétraèdres $SiO_4$ de type $Q_3$. Si l'on tient compte également de ce que le rapport molaire $K_2O$:$Al_2O_3$ = 1,5:1, le géopolymère obtenu correspond à un poly(sialate-disiloxo) (K)-PSDS

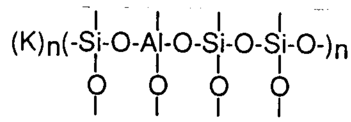

de structure tridimensionnelle contenant également des éléments de structure liniaire bi-dimensionnelle.

Exemple 5)

On étudie la variation de la viscosité de la résine géopolymèrique réalisée dans l'exemple 4). La mesure est effectuée à 40 ° C. On constate les 4 phases suivantes:

| | Viscosité en Pa.s au bout de | | | | | |
|---|---|---|---|---|---|---|
| | 0min | 15min | 1h15 | 2h30 | 3h | 4h |
| viscosité | 0.32 | 0.23 | 0.6 | 800 | 1200 | 8000 |
| phase | | a) | b) | c) | d) | |

Exemple 6)

La résine de l'exemple 4), lorsqu'elle a terminé la phase b) de la maturation (phase de dissolution), est employée pour imprégner des tissus ou tout autre support fibreux, feutres ou non-tissés.

On prend par exemple un tissus de carbure de silicium SiC 0-90 ° de 400g/m$^2$; il est imprégné par 400g/m$^2$ de la résine de l'exemple 5). Une plaquette contenant 6 plis est pressée à 100 ° C, pression de 3 kg/cm$^2$. On obtient au bout de 15 minutes un matériau composite ayant une résistance flexion Rf = 220 MPa, un module de 50 GPa, classé protection non-feu Mo,Fo.

Exemple 7)

Le composite réalisé dans l'exemple 6) est contrecollé sur un panneau de particules de bois. On fabrique ainsi un panneau coupe-feu ayant une excellente tenue au feu et d'excellentes caractéristiques mécaniques.

Le composite peut être aussi contre-collé sur tout autre matériau, comme par exemple le nid-d'abeille, la mousse organique ou minérale.

Les matériaux composites fibreux pouvant être imprégnés par la résine géopolymèrique obtenue selon l'invention, seront constitués par au moins une couche de fibres minérales, métalliques et/ou organiques. On petit citer à titre d'exemple non limitatif les fibres céramiques, la fibre de carbone, de kaolin, de SiC, d'alumine, le coton et autres fibres organiques naturelles, artificielles ou synthétiques, les fibres et aiguilles en acier, la fibre d'amiante et de mica, la fibre de verre, la fibre de roche, la fibre de bore.

Exemple 8)

La résine de l'exemple 5) est laissée maturer jusqu'à ce que la viscosité atteigne 2.5-3 Pa.s, point d'inflexion qui marque le passage de la phase c) à la phase d), c'est à dire de la phase dans laquelle le géopolymère possède une structure bi-dimensionnelle avec $SiO_4$ de type $Q_3$ vers la phase dans laquelle le géopolymère est tri-dimensionnel avec $SiO_4$ de type $Q_4$.

Par les techniques connues, on réalise un film de 0,1-0,2mm d'épaisseur que l'on fait ensuite durcir. On obtient un film stable thermiquement jusque 600 ° C.

L'homme de l'art comprendra l'intérêt d'avoir à sa disposition un procédé permettant d'obtenir un géopolymère beaucoup plus stable en température car ayant un rapport Si/Al>2, si l'on se réfère aux géopolymères réalisés dans l'art antérieur. De plus, le durcissement beaucoup plus rapide du liant géopolymère de la présente invention, par exemple de 15 minutes sous presse à 100 ° C, au lieu de 1h à 1h30 dans l'art antérieur, représente également un avantage certain, du point de vue de l'application industrielle. Enfin, toujours par rapport à l'art antérieur, le fait de ne pas être obligé d'ajouter des charges pour empêcher la fissuration de la matrice géopolymèrique, permet de conserver une viscosité très basse à

la résine géopolymèrique et de développer son caractère filmogène, ce qui est un avantage certain lorsqu'il s'agira d'imprégner des fibres, ou aussi d'autres matières granuleuses. Le procédé facilitera la fabrication d'objets de toute forme et de toute dimension, résistants à l'aggression thermique et utilisables en continue à des températures allant jusque 1100 °C, dotés de propriétés particulières et résultant du durcissement de la résine géopolymèrique de la famille du Poly(sialate-disiloxo), (M-PSDS), soit par agglomération de charges minérales, métalliques et/ou organiques, soit par imprégnation de fibres, non-tissés, feutres ou tissus.

Bien entendu, diverses modifications peuvent être apportées par l'homme de l'art au procédé qui vient d'être décrit uniquement à titre d'exemple, sans sortir du cadre de l'invention.

## Revendications

**1.** Procédé d'obtention d'un géopolymère alumino-silicate, dont la composition à l'état hydraté, exprimée en terme d'oxyde est:

$yM_2O:Al_2O_3:xSiO_2:wH_2O$

dans laquelle $M_2O$ est $K_2O$ et/ou $Na_2O$, "w" est une valeur au plus égale à 3, "x" est une valeur comprise entre 5,5 et 6,5, "y" est une valeur comprise entre 1,0 et 1,6, le dit géopolymère étant de la famille du Poly(sialate-disiloxo) alcalin (M)-PSDS de formule

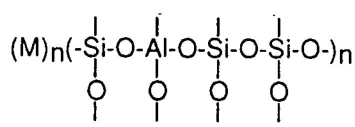

de structure tridimensionnelle contenant également des éléments de structure bidimensionnelle, M représentant au moins un cation alcalin et n le degré de polymérisation, *caractérisé* en ce qu'il consiste à faire réagir une résine géopolymèrique obtenu a partir d'un mélange rèactionnel contenant:

a) une solution alcaline de fumée de silice thermique ayant un rapport molaire $SiO_2:M_2O$ compris entre ou égal à:

| | |
|---|---|
| $SiO_2:M_2O$ | 4,0:1 et 6,5:1 |

dont la concentration est supérieure à 60% en poids et dont la viscosité initiale à 20 °C est de 0.2 Pa.s, puis augmente pour ne pas dépasser 0.5 Pa.s avant 5 heures à 20 °C;

b) un oxyde alumino-silicate ($Si_2O_5,Al_2O_2$)) dans lequel le cation Al est en coordination (IV-V) comme déterminé par le spectre MAS-NMR pour $^{27}Al$, le dit oxyde étant en quantité telle que, dans le dit mélange réactionnel, le rapport molaire $Al_2O_3:SiO_2$ est compris entre ou égal à:

| | |
|---|---|
| $Al_2O_3:SiO_2$ | 1:5,5 et 1:6,5 |

puis à laisser durcir la dite résine géopolymèrique.

**2.** Procédé selon la revendication 1) *caractérisé* en ce que la dite fumée de silice thermique est obtenue au four électrique par condensation de vapeur de SiO et de AlO, contenant au plus 10% en poids de $Al_2O_3$ et au moins 90% en poids de $SiO_2$, la dite silice thermique ayant une formule chimique brute égale à ou comprise entre ($13SiO_2,AlO_2$) et ($16SiO_2,AlO_2$), c'est à dire celle d'un oxyde alumino-silicate dans lequel Al est en coordination (IV).

**3.** Procédé selon la revendication 1) ou 2) *caractérisé* en ce que l'oxyde $M_2O$ est l'oxyde $K_2O$.

**4.** Procédé d'obtention d'un géopolymère de la famille du Poly(sialate-disiloxo) de potassium (K)-PSDS de formule

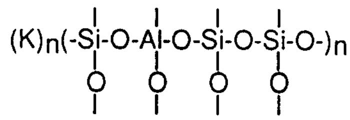

selon la revendication 3) *caractérisé* en ce pour obtenir la dite résine géopolymèrique on prépare séparément:

a) une solution aqueuse de silicate de potasse de rapport molaire

| | |
|---|---|
| $K_2O:SiO_2$ | 1:1 |

concentrée à 50%;

b) une poudre contenant le dit oxyde alumino-silicate ($Si_2O5.Al_2O_2$) et la silice thermique ($15SiO_2,AlO_2$);

Dans le mélange des constituants a) et b) dont la teneur en eau est inférieure à 30% en poids, la viscosité initiale de la résine géopolymèrique est de 0.35-0.5 Pa.s, et le rapport molaire des oxydes compris entre ou égal à:

| | |
|---|---|
| $K_2O:SiO_2$ | 1:4,0 et 1:6,5 |
| $Al_2O_3:SiO_2$ | 1:5,5 et 1:6,5 |
| $K_2O:H_2O$ | 1:7,0 et 1:12,0 |

Puis on laisse maturer la dite résine géopolymèrique pour permettre la dissolution de la dite silice thermique ($15SiO_2,AlO_2$); la viscosité diminue d'abord jusqu'à un minimum de 0.25-0.3 Pa.s, puis elle augmente jusque 0.5 Pa.s pendant la phase de dissolution proprement dite, pour atteindre 2.5-3 Pa.s lorsque l'on se trouve dans la phase de géopolymérisation.

**5.** Procédé d'obtention d'un géopolymère de la famille du Poly(sialate-disiloxo) alcalin (M)-PSDS de formule

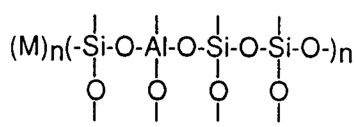

M représentant au moins un cation alcalin et n le degré de polymérisation, selon l'une quelconque des revendications 1) à 4), *caractérisé* en ce que pour éviter la migration de d'alumino-silicate linéaire non stabilisé dans la matrice géopolymère, on ajoute au dit mélange réactionnel 2,5% à 3,5% en poids de ZnO.

**6.** Procédé selon la revendication 1) ou 2) *caractérisé* en ce que l'oxyde $M_2O$ est l'oxyde $Na_2O$

**7.** Objet de toute forme et de toute dimension résultant du durcissement de la résine géopolymèrique obtenue selon l'une quelconque des revendications 1) à 6), soit par agglomération de charges minérales, métalliques et/ou organiques, soit par imprégnation de fibres, non-tissés, feutres ou tissus.

**8.** Film et fil à base d'un géopolymère de la famille du Poly(sialate-disiloxo) alcalin (M)-PSDS

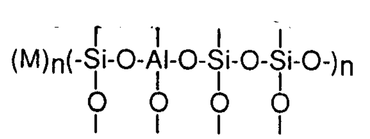

M représentant au moins un cation alcalin et n le degré de polymérisation, obtenu par étirage puis. durcissement d'une résine géopolymèrique préparée selon l'une quelconque des revendications 1) à 6).

**9.** Résine géopolymère à deux constituants, permettant l'obtention d'un géopolymère de la famille du Poly(sialate-disiloxo) de potassium (K)-PSDS de formule

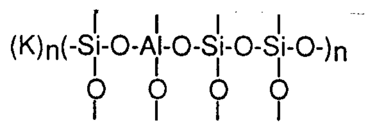

*caractérisé* en ce que elle comprend:

a) une solution aqueuse de silicate de potasse de rapport molaire

| | |
|---|---|
| $K_2O:SiO_2$ | 1:1 |

concentrée à 50%;

b) une poudre contenant l'oxyde alumino-silicate ($Si_2O5.Al_2O_2$) et la silice thermique ($15SiO_2,AlO_2$); de telle sorte que après le mélange des deux constituants, le rapport molaire entre les oxydes soit compris entre ou égal à:

| | |
|---|---|
| $K_2O:SiO_2$ | 1:4,0 et 1:6,5 |
| $Al_2O_3:SiO_2$ | 1:5,5 et 1:6,5 |
| $K_2O:H_2O$ | 1:7,0 et 1:12,0 |

## Claims

**1.** A method for obtaining an alumino-silicate geopolymer whose composition expressed in terms of oxides and in fully hydrated form is:

$yM_2O:Al_2O_3:xSiO_2:wH_2O$

where $M_2O$ is $K_2O$ and/or $Na_2O$, "w" has a value at most equal to 3, "x" has a value comprised between 5.5 and 6.5, "y" has a value comprised between 1.0 and 1.6, the said geopolymer belonging essentially to the family of alkaline poly(sialate-disiloxo) (M)-PSDS with the formula

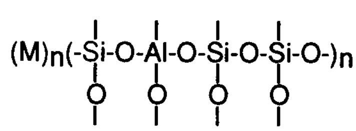

where "M" is at least one alkaline cation and "n" the polymerization degree, wherein the method consists of reacting a geopolymeric resin obtained from a reactional mixture comprising:

a) an alkaline solution of thermal silica fume with a molar ratio $SiO_2:M_2O$ comprised between or equal to

| | |
|---|---|
| $SiO_2:M_2O$ | 4.0:1 and 6.6:1 |

the concentration of which is over 60% wt and where the initial viscosity at 20⁻C is 0,2 Pa.s, then increases but does not exceed 0,5 Pa.s before 5 hours at 20⁻C;

b) an alumino-silicate oxide ($Si_2O_5,Al_2O_2$) in which the Al cation is in coordination (IV-V), as determined by the MAS-NMR spectrum for $^{27}Al$, the said oxide being in such a quantity that the molar ratio $Al_2O_3:SiO_2$ is comprised between or equal to

| | |
|---|---|
| $Al_2O_3:SiO_2$ | 1:5.5 and 1:6.5, |

and then allowing the said geopolymeric resin to cure.

**2.** A method accoridng to claim 1), wherein the said thermal silica fume is prepared by electrofusion and condensation of SiO and AlO vapors, the said thermal silica fume contains at most 10% by weight $Al_2O_3$ and at least 90% by weight $SiO_2$ and has a chemical formula comprised between $(13Si_2O_5,Al_2O_2)$ and $(16Si_2O_5,Al_2O_2)$, representing an alumino-silicate oxide with Al in coordination (IV).

**3.** A method according to claim 1) or claim 2) wherein the oxide $M_2O$ is the oxide $K_2O$.

**4.** A method for obtaining a geopolymer of the alkaline poly(sialate-disiloxo) family (K)-PSDS of formula

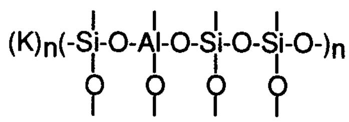

according to claim 3, wherein the geopolymeric resin is produced after having prepared separately:
a) an aqueous potassium silicate solution with a molar ratio

| | |
|---|---|
| $K_2O:SiO_2$ | 1:1 |

with a 50% concentration;
b) a powder comprising the alumino-silicate oxide $(Si_2O_5,Al_2O_2)$ and the thermal silica fume $(15Si_2O_5,Al_2O_2)$;
The geopolymeric resin resulting from the mixture of a) + b) has a water content lower than 30% by weight, the initial viscosity being in the 0,35-0,5 Pa.s range and the oxide molar ratio comprised between or equal to:

| | |
|---|---|
| $K_2O:SiO_2$ | 1:4.0 and 1:6.5 |
| $Al_2O_3:SiO_2$ | 1:5.5 and 1:6.5 |
| $K_2O:H_2O$ | 1:7.0 and 1:12.0 |

Maturation of the said geopolymeric resin dissolves the said thermal silica $(15Si_2O_5,Al_2O_2)$;during the first step the viscosity decreases to reach a minimum at 0,25-0,3 Pa.s, then it increases slowly up to 0,5 Pa.s during the dissolution step and reaches 2,5-3,0 Pa.s in the geopolymerization step.

**5.** A method for obtaining a geopolymer of the family of alkaline poly(sialate-disiloxo) (M)-PSDS with the formula

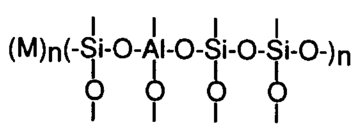

where "M" is at least one alkaline cation and "n" the polymerization degree, according to any one of claims 1,2,3 or 4, wherein 2.5% to 5.5% by weight of ZnO are added to the reactional mixture to minimize any migration of unstable linear alumino-silicate throughout the geopolymeric matrix.

**6.** A method according to claim 1) or claim 2) wherein the oxide $M_2O$ is the oxide $Na_2O$.

**7.** Items in any shape and dimension produced by harderning a geopolymer resin according to any one of claims 1 to 6, involving the agglomeration of mineral-, metallic and/or organic fillers, the impregnation of fibers, non-wovens, felts or fabrics.

**8.** Film and thread made of a geopolymer of the family of alkaline poly(sialate-disiloxo) (M)-PSDS with the formula

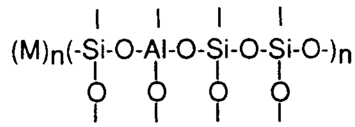

where "M" is at least one alkaline cation and "n" the polymerization degree, produced by streching and hardening a geopolymer resin according to any one of claims 1 to 6.

**9.** Two-constituent geopolymer resin used for the production of a geopolymer of the alkaline poly(sialate-disiloxo) family (K)-PSDS of formula

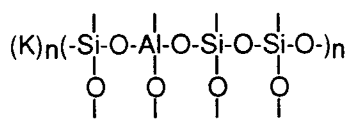

the said geopolymer resin comprising:

a) an aqueous potassium silicate solution with a molar ratio

| | |
|---|---|
| $K_2O:SiO_2$ | 1:1 |

with a 50% concentration;

b) a powder comprising the alumino-silicate oxide ($Si_2O_5,Al_2O_2$) and the thermal fume silica ($15Si_2O_5,Al_2O_2$);

wherein after mixture of the said two constituents, the oxide molar ratio is comprised between or equal to:

| | |
|---|---|
| $K_2O:SiO_2$ | 1:4.0 and 1:6.5 |
| $Al_2O_3:SiO_2$ | 1:5.5 and 1:6.5 |
| $K_2O:H_2O$ | 1:7.0 and 1:12.0 |

**Patentansprüche**

**1.** Verfahren zur Gewinnung eines Aluminiumsilikat-Geopolymers dessen Zusammensetzung in hydratisiertem Zustand in Oxiden ausgedrückt folgende ist:

$yM_2O:Al_2O_3:xSiO_2:wH_2O$

in welchem $M_2O$ aus $K_2O$ und/oder $Na_2O$ besteht, w einen Wert von höchstens gleich 3, x einen Wert zwischen 5,5 und 6,5, y einen Wert zwischen 1,0 und 1,6 darstellt, das besagte Geopolymer gehört hauptsächlich der Familie des alkalischen Poly(sialat-disiloxo) (M)-PSDS an und hat die Formel

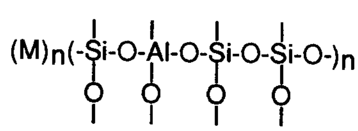

wobei *M* mindestens ein alkalisches Kation bedeutet und *n* den Polymerisationsgrad, dadurch gekennzeichnet, dass man ein Geopolymer-Harz reagieren lassen kann, das aus einer Reaktionsmischung gewonnen wurde, enthaltend:

a) eine alkalische Lösung von thermischem Silicafume mit dem Molarvehältnis $SiO_2$:$M_2O$ zwischen oder gleich

| | |
|---|---|
| $SiO_2$:$M_2O$ | 4.0:1 und 6.6:1 |

dessen Konzentration höher als 60 Gewichtprozentanteil ist und dessen Anfangsviskosität bei 20 °C 0,2 Pa.s beträgt, dann in die Höhe geht, aber nicht 0,5 Pa.s innerhalb 5 Stunden bei 20 °C übersteigt;

b) enthaltend ein Aluminosilikatoxid ($Si_2O_5$,$Al_2O_2$), in welchem sich das Kation Al sich in IV-V Koordination befindet, wie durch das $^{27}Al$ MAS-NMR Spektrum gezeigt wird, das genannte Aluminiosilikatoxid ist in einer Menge vorhanden, die in der besagten Reaktionsmischung ein Molarverhältnis $Al_2O_3$:$SiO_2$ zwischen oder gleich

| | |
|---|---|
| $Al_2O_3$:$SiO_2$ | 1:5.5 and 1:6.5, |

hat

**2.** Verfahren nach Anspruch 1) dadurch gekennzeichnet, dass das besagte thermische Silicafume im Elektroofen durch Kondensation von SiO und AlO Dämpfen gewonnen wird, enthaltend bis zu 10 Gewichtprozenten $Al_2O_3$ und mindestens 90 Gewichtsprozenten $SiO_2$, mit der chemischen Formel, die sich zwischen ($13Si_2O_5$,$Al_2O_2$) und ($16Si_2O_5$,$Al_2O_2$), bewegt, das heisst eines Aluminosilikatoxides, dessen Al-Kation sich in vierer Koordination befindet.

**3.** Verfahren nach Anspruch 1) oder 2) dadurch gekennzeichnet, dass das besagte Alkalisilikat ein Kaliumsilikat ist.

**4.** Verfahren zur Gewinnung eines Geopolymers der Kalium-poly(sialat-disiloxo) (K)-PSDS-Familie mit der Formel:

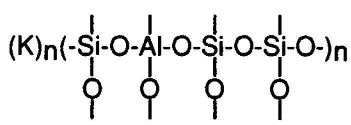

nach Anspruch 3), dadurch gekennzeichnet, dass zum Erhalt besagten Geopolymer-Harzes, man:

a) eine wässerige Lösung von Kaliumsilikat im Molarverhältnis

| | |
|---|---|
| $K_2O$:$SiO_2$ | 1:1 |

in einer Konzentration von 50%

b) ein Pulver aus besagtem Aluminosilikatoxid ($Si_2O_5$,$Al_2O_2$) und thermischem Silicafume ($15Si_2O_5$,$Al_2O_2$);

getrennt zubereitet; in der Mischung der Bestandteile a) und b) der Wassergehalt unterhalb von 30% Gewichtprozenten liegt, die Anfangsviskosität des Geopolymeren Harzes 350-500 Pa.ss beträgt und das Molekularverhältnis der Oxide zwischen:

| | |
|---|---|
| $K_2O:SiO_2$ | 1:4.0 und 1:6.5 |
| $Al_2O_3:SiO_2$ | 1:5.5 und 1:6.5 |
| $K_2O:H_2O$ | 1:7.0 und 1:12.0 |

liegt oder gleich ist.

Dann lässt man das besagte geopolymere Harz reifen, damit das besagte thermische Silicafume ($15Si_2O_5,Al_2O_2$) in Lösung gehen kann, zuerst verringert sich die Viskosität bis auf ein Minimum von 0,25-0,30 Pa.s, während der eigentlichen Lösungsphase geht diese wieder in die Höhe bis auf 0,50 Pa.s und erreicht in der Geopolymerisationsphase 2,50-3,00 Pa.s.

**5.** Verfahren zur Gewinnung eines Geopolymers der Alkali-poly(sialat-disiloxo) (M)-PSDS Familie mit der Formel:

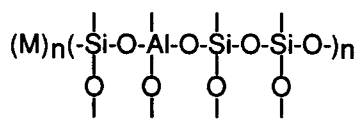

wobei *M* mindestens ein alkalisches Kation bedeutet und *n* den Polymerisationsgrad darstellt, nach irgend einer der Ansprüche 1) bis 4), dadurch gekennzeichnet, dass zur Verminderung der Migration linearen nicht stabilisierten Aluminiumsilikates in die geopolymere Matrix, besagter Reaktions-Mischung 2,5 bis 3,5 Gewichtsprozente ZnO hinzugefügt wird.

**6.** Verfahren nach Anspruch 1) oder 2), dadurch gekennzeichnet, dass besagtes alkalisches Silikat ein Natriumsilikat ist.

**7.** Gegenstände in jeder Form und Dimension, die durch Erhärten des geoplymeren Harzes erhalten werden können, das Harz, das nach irgend einem der Ansprüche 1 bis 6 hergestellt werden kann, sei es durch Agglomeration von mineralischen, metallischen oder organischen Füllstoffen, sei es durch Imprägnierung von Fasern, Vliessen, Filzen oder Geweben.

**8.** Film oder Faden aus einem Geopolymer der Familie der alkalischen Poly(sialat-disiloxo) (M)-PSDS mit der Formel

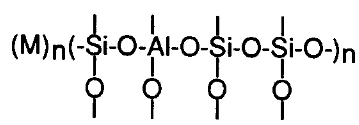

wobei *M* mindestens ein alkalisches Kation bedeutet und *n* den Polymerisationsgrad darstellt, erhalten durch Ausziehen, dann Erhärten eines geopolymerischen Harzes, das nach irgend einer der Ansprüche von 1) bis 6) hergestellt worden ist.

**9.** Geopolymeres Harz aus zwei Bestandteilen zur Herstellung eines Geopolymers der Familie der Kalium-Poly(sialat-disiloxo) (K)-PSDS mit der Formel

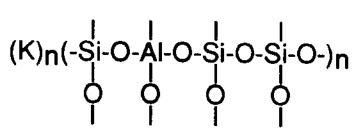

dadurch gekennzeichnet, dass es

a) eine 50%ige wässerige Lösung von Kaliumsilikat enthält mit dem Molarverhältnis

| | |
|---|---|
| $K_2O:SiO_2$ | 1:1 |

b) ein Pulver das aus Aluminosilikatoxid ($Si_2O_5,Al_2O_2$) und thermischem Silicafume ($15Si_2O_5,Al_2O_2$) besteht;

so dass nach dem Mischen der beiden Bestandteile das Molarverhältnis zwischen den Oxiden zwischen

| | |
|---|---|
| $K_2O:SiO_2$ | 1:4.0 and 1:6.5 |
| $Al_2O_3:SiO_2$ | 1:5.5 and 1:6.5 |
| $K_2O:H_2O$ | 1:7.0 and 1:12.0 |

liegt oder gleich ist.